# EUROPEAN PATENT APPLICATION

(11) **EP 3 001 420 A1**
(43) Date of publication of application: **30.03.2016**
(21) Application number: 14800652.1
(22) Date of filing: 20.05.2014
(51) Int. Cl.: G11B 20/10

(54) **IMPROVED METHOD FOR PRE-LISTENING TO VOICE CONTENTS**

(30) Priority: 20.05.2013 KR 20130056238
(71) Applicant: Cho, Joun Rai, Seoul 135-555 (KR)
(72) Inventor: Cho, Joun Rai, Seoul 135-555 (KR)
(74) Representative: Gardiner, Stephen Robin
(86) International application number: PCT/KR2014/004498
(87) International publication number: WO 2014/189259

(57) **Abstract**

The present invention relates to a method for pre-listening to voice contents. More particularly, the present invention relates to a method for pre-listening to voice contents, which is used in a system for providing voice contents, the method comprising the steps of: displaying a plurality of voice contents in a list form; scrolling a screen such that particular voice contents are located at a selected line; and reproducing a voice of the corresponding voice contents located at the selected line, wherein the voice of the corresponding voice contents is reproduced just by randomly making the selected line pass through the voice contents during the scroll. In a system for providing voice contents, when a screen is scrolled such that particular voice contents among a plurality of voice contents of a voice content list displayed on the screen is located at a selected line, a voice of the corresponding contents can be listened to just by randomly making the selected line pass through the voice contents, so that the method for pre-listening to the voice contents according to the present invention has an effect in that a search time to find desired voice contents is significantly reduced and the method is simple.

## Description

### [Technical Field]

The present invention relates to a method for pre-listening to a plurality of voice contents in a rapid and easy manner in a system providing the plurality of voice contents.

### [Background Art]

A desired voice content is often selected from a plurality of voice contents, through on-line music selling sites, voice selling sites, and CD pre-listening systems of record stores, irrespective of on/off lines. In conventional practices, information (title, writer, player, manufacturer, manufacturing year, price, photo etc.) on each voice content is arranged on a screen, and additionally, a pre-listening button for each voice content is provided. Accordingly, the information on each voice content is checked out by a user's eyes, and at the same time, the pre-listening button for each voice content is clicked to reproduce the voice of the corresponding voice content, thus allowing the voice to be audibly checked by the user.

For example, a plurality of songs is displayed in a form of a list according to new song lists, ranking for selling albums, and singer/song keyword search results on on-line music selling sites, and accordingly, pre-listening voice data is reproduced through the text information on the list or the pre-listening button clicking.

There are CD pre-listening systems of record stores as examples of the systems not connected to network, and in this case, explanations on a plurality of CDs and information on songs on each track are displayed on a device. Accordingly, the CDs are changed and otherwise, a specific track is reproduced, so that a desired song is reproduced and checked, through the button manipulation of the user.

Like this, a lot of complicate operations of the user are needed to manipulate each pre-listening button for the plurality of songs, and further, a lot of time for the manipulation is undesirably consumed.

While a pre-listening voice for one voice content is being reproduced, if a pre-listening voice for another voice content is reproduced, the voice content reproduced currently stops automatically. In some cases, however, a stop button for the voice content reproduced currently has to be pressed, which gives many inconveniences to the user.

Accordingly, there is a need for a pre-listening method for more rapidly and conveniently searching and selecting a desired voice content from a plurality of voice contents in a system providing the plurality of voice contents.

### [Disclosure]

### [Technical Problem]

Accordingly, the present invention has been made in view of the above-mentioned problems occurring in the prior art, and it is an object of the present invention to provide a pre-listening method for more rapidly and conveniently searching and selecting a desired voice content from a plurality of voice contents in a system providing the plurality of voice contents.

### [Technical Solution]

To accomplish the above-mentioned object, according to the present invention, there is provided a method for pre-listening to voice contents, which is used in a system providing the voice contents, the method including the steps of: displaying the voice contents in a form of a list; scrolling a screen such that a given desired voice content of the voice contents is located on a selected line; and reproducing a voice of the desired voice content located on the selected line, wherein the selected line just passes through the voice contents during the scrolling, thus reproducing the voice of the desired voice content on which the selected line is located.

### [Advantageous Effects]

According to the present invention, the method for pre-listening to voice contents, which is used in the system providing the voice contents, is configured to allow the selected line just to pass through the voice contents, thus reproducing the voice of a desired voice content when the screen is scrolled to allow the desired voice content from the plurality of voice contents on the voice content list displayed on the screen to be located on the selected line, thus drastically reducing the time for searching the desired voice content and performing the pre-listening in a very convenient way.

### [Description of Drawings]

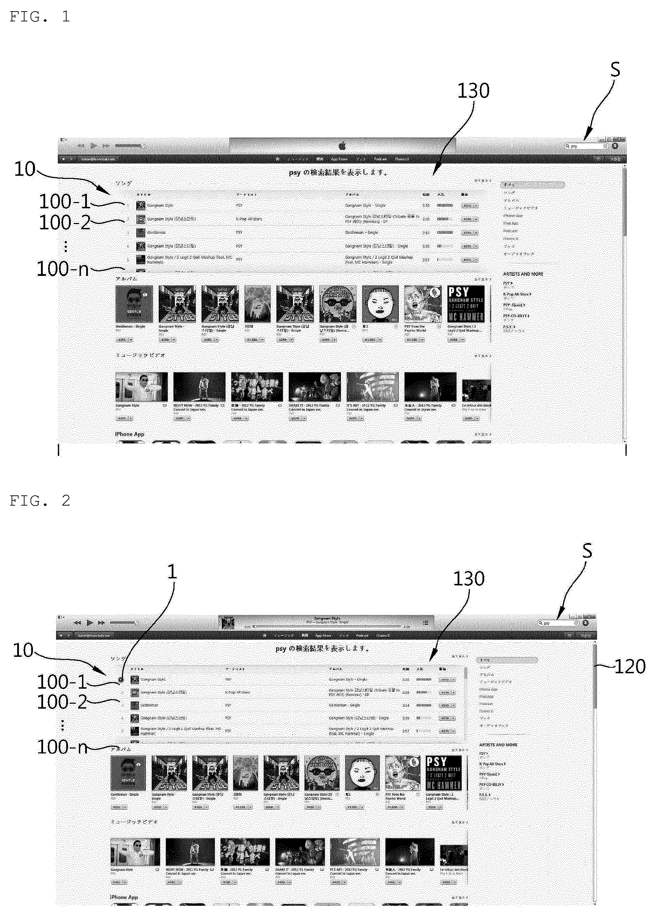

FIG.1 shows a voice content list 10 having a plurality of voice contents 100-1∼100-n displayed after Korean singer, Psy has been inputted to a search window of a given music store on on-line music-selling sites.
FIG.2 shows a list on which a voice, Gangnam Style is reproduced when a pre-listening icon of Gangnam Style on a first voice content 100-1 on the voice content list of FIG.1 is clicked.

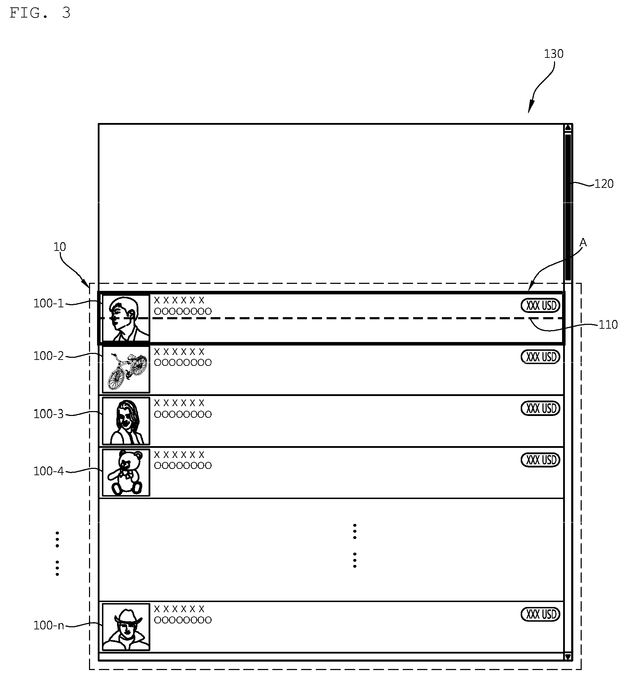

FIG.3 shows a screen on which a scroll bar 120 moves to allow a selected line 110 to be located on a display area A of the first voice content 100-1, while pre-listening voices of the plurality of voice contents 100-1∼100-n on the voice content list 10 are being reproducible, so that the voice of the first voice content 100-1 is immediately reproduced automatically.

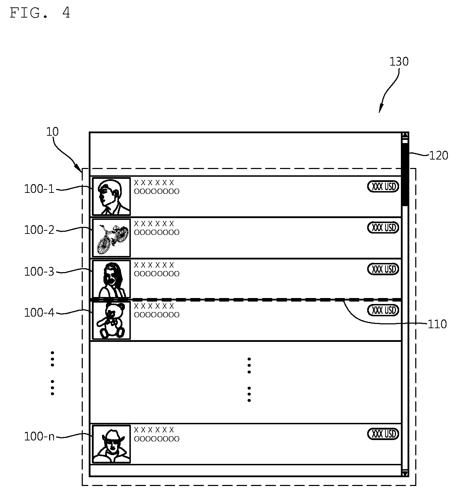

FIG.4 shows a screen on which if the selected line 110 is located between the center of the display area of a third voice content 100-3 and the center of the display area of a fourth voice content 100-4, a voice of the third voice content 100-3 and a voice of the fourth voice content 100-4 are at the same time reproduced.

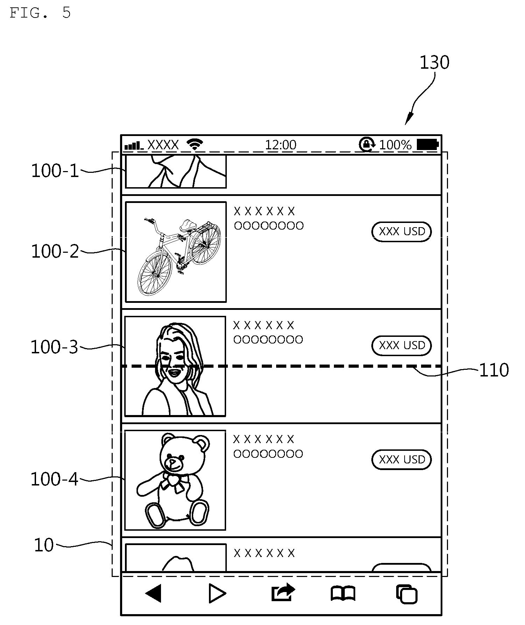

FIG.5 shows a screen on which if a selected line 110 passes through a first voice content 100-1 and a second voice content 100-2 and is thus located on the display area of a third voice content 100-3 through the touch sliding of the screen, while pre-listening voices of the plurality of voice contents 100-1∼100-n on the voice content list 10 on a smartphone are being reproducible, the voice of the third voice content 100-3 is automatically reproduced after the voices of the first voice content 100-1 and the second voice content 100-2 have been reproduced during the selected line 110 passes through the display areas of the first voice content 100-1 and the second voice content 100-2.

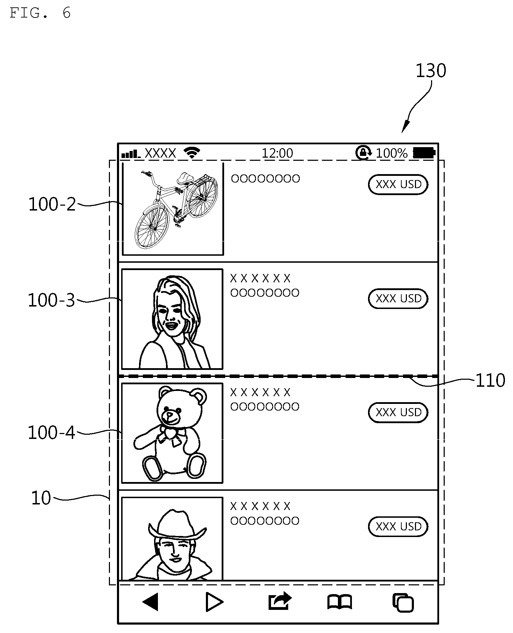

FIG.6 shows a screen on which if the selected line 110 is located between the center of the display area of a third voice content 100-3 and the center of the display area of a fourth voice content 100-4, a voice of the third voice content 100-3 and a voice of the fourth voice content 100-4 are at the same time reproduced.

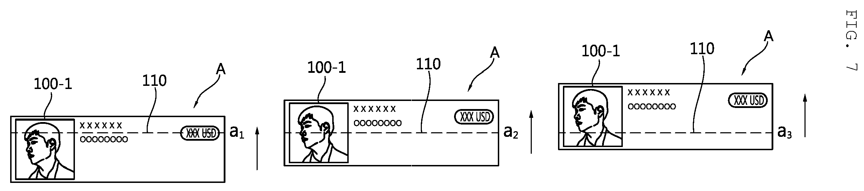

FIG.7 shows a screen on which when the selected line 110 is located on the first voice content 100-1 to reproduce the voice of the first voice content, it may be located at various positions a1,a2,a3 and the like of the display area of the first voice content 100-1 by means of the scrolling.

### [Explanation of Reference Numerals]

1: pre-listening icon
10: voice content list 100-1 to 100-n: voice contents
A: display area of voice content
110: selected line 120: scroll bar
130: screen

### [Mode for Invention]

The present invention relates to a method for pre-listening to voice contents, and more particularly, to a method for pre-listening to voice contents, which is used in a system providing the voice contents, the method including the steps of: displaying the voice contents in a form of a list; scrolling a screen such that a given desired voice content of the voice contents is located on a selected line; and reproducing a voice of the desired voice content located on the selected line, wherein the selected line just passes through the voice contents during the scrolling, thus reproducing the voice of the desired voice content on which the selected line is located.

The method for pre-listening to voice contents according to the present invention is used in a system providing the voice contents, and according to the present invention, the method for pre-listening to voice contents includes the step of displaying the voice contents in a form of a list, in the system that provides the voice contents, such as on-line music selling sites, voice selling sites, and CD pre-listening systems of record stores, irrespective of on/off lines.

For example, a plurality of songs is displayed in a form of a list according to new song lists, ranking for selling albums, and singer/song keyword search results on the on-line music selling sites.

If voice contents are downloaded through wire/wireless networks in a form of a file, further, the voice contents are displayed on a form of a list, and in this case, all or a portion of the voice files of the voice contents on the list are (is) downloaded or being downloaded. In more detail, the pre-listening voice files of all or a portion of the voice contents displayed in the form of the list on a screen are downloaded or being downloaded. Moreover, only an initial portion of the whole reproducing time is downloaded to allow all or a portion of the voice files of the plurality of voice contents to be immediately reproducible, and after a given voice file has been reproduced, the remaining portion can be downloaded if necessary.

For example, if it is assumed that total 20 voice contents are displayed on the list, total reproducing time for each voice content is one minute, and the size of voice file is about one megabyte, all of 20 voice files have been downloaded, and otherwise, 10 voice files have been downloaded, while the others are being downloaded. Further, portions (for example, voices for six seconds in the initial portion of the voice file, that is, about 100 kilobytes) of 20 voice files have been downloaded to allow the 20 voice files to be immediately reproducible, and after the voice file has been reproduced, the remaining capacity (about 900 kilobytes) is additionally downloaded.

In the CD pre-listening systems of the record stores not connected to network, explanations on a plurality of CDs and information on songs on each track are displayed on a device.

The system providing the voice contents includes a mobile communication terminal like a smartphone, a tablet PC, a PMP, and a cellular phone, a desktop personnel computer, a laptop computer, a notebook computer, a smart TV, a set-top box, a frame type smart terminal, a vehicle navigator, an IP telephone terminal, a wearable computer, a game machine, a CD/MP3 player, a CD pre-listening machine of a record store, a karaoke machine, a background song reproduction machine or a jukebox, but the system is not limited thereto only if it provides the voice contents.

In addition to the voices of the voice contents, all information on the voice contents, such as voices, song names, singer names, album names, singer photos, album covers, reproduction time, prices, customer popularity is displayed.

Next, the method according to the present invention includes the step of scrolling a screen to move a display position on the screen in up/down or left/right sides, so that a given voice content of the voice contents is located on a selected line.

The method for moving the display position on the screen in up/down or left/right sides is a known scrolling method. For example, a scrollbar is dragged by a mouse, up, down, left and right buttons on a keyboard are pressed, a mouse wheel is turned up and down, or a mouse wheel button is pressed to move cursor positions, thus scrolling the screen in up/down or left/right sides. Otherwise, a joystick is bent in every direction, a cross button is pressed, a cursor is located on a given portion of a screen and dragged in a state where a button of a remote controller type controller is pressed, or a screen slides by means of touch, thus scrolling the screen in up/down or left/right sides. Otherwise, a status bar is pressed to move a scroll to a top position, or a screen is slant to one side, thus scrolling the screen in up/down or left/right sides. In case of an eyeglass wearable computer, further, the screen is scrolled in up/down or left/right sides by means of a wearer's gestures, such as waving his or her hand, blinking his or her eyes, changing his or her facial expressions, his or her brainwaves, or breathing in and out.

The selected line includes a linear, curved or oblique line traversing the screen horizontally or vertically, and the kinds of line include solid, broken, dashed and dotted lines and the like. Otherwise, the selected line includes an opaque figure, a semi-transparent figure, or a figure having irregular transparency, wherein the figures have a given area. And the selected line may be empty in interior and have an outline, such as a solid, broken, dashed and dotted lines and the like. Otherwise, the selected line includes all kinds of figures or characters, such as an arrow, ►, 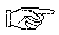 , » and the like, and instead of traversing the screen horizontally or vertically, in this case, the selected line is fixed to a specific position.

Further, the position of the selected line may be arbitrarily determined on the screen by means of a user.

Further, if the voice contents on the voice content list are randomly arranged, not arranged in an up/down or left/right direction, the display position on the screen moves in every direction to automatically reproduce the voices of the voice contents.

Next, the method according to the present invention includes the step of reproducing a voice of the given voice content located on the selected line, wherein the voice of the given voice content on which the selected line is located by means of the scrolling is immediately reproduced to allow the user to listen to the voice of the given voice content.

At this time, when the voice of the given voice content on which the selected line is located is reproduced, the voice has constant loudness, and otherwise, as the center of the display area of the given voice content is distant from the selected line, that is, as the selected line becomes close to the top/bottom ends or left/right ends of the given voice content, the loudness of the voice of the given voice content becomes decreased.

On the other hand, in the step of scrolling the screen to allow the given voice content to be located on the selected line, if the selected line is located between the center of the display area of a voice content (a first voice content) and the center of the display area of a voice content (a second voice content), both of the voice of the first voice content and the voice of the second voice content are reproduced. In this case, both of the voice of the first voice content and the voice of the second voice content are reproduced, and the loudness of the voice of the voice content having the display area whose center is located closer to the selected line is larger than that of the other voice content.

Or, in the step of scrolling the screen to allow the given voice content to be located on the selected line, if the selected line is located between the center of the display area of the first voice content and the center of the display area of the second voice content, the voice of the voice content having the display area whose center is located closer to the selected line is reproduced.

Or, in the step of scrolling the screen to allow the given voice content to be located on the selected line, if the selected line is located between the center of the display area of the first voice content and the center of the display area of the second voice content, no voices of the first voice content and the second voice content are reproduced.

Hereinafter, an explanation on the method for pre-listening to voice contents according to the present invention will be in detail given with reference to embodiments and the attached drawings. While the present invention will be described with reference to the particular illustrative embodiments and drawings, it is not to be restricted by the embodiments but only by the appended claims. It is to be appreciated that those skilled in the art can change or modify the embodiments without departing from the scope and spirit of the present invention.

The method according to the present invention is used in the system that provides the voice contents, irrespective of on/off lines, and the voice contents are displayed in a form of a list. At this time, the selected line like a broken line traversing the screen horizontally or vertically is displayed on the screen.

If a vertical scrollbar is moved up and down by means of a user's keyboard or mouse manipulation, the voice contents on the voice content list are moved up and down, so that the voice contents located on the selected line are changed and the pre-listening voices of the voice contents located on the selected line are automatically reproduced.

In more detail, FIG.3 shows a screen on which a scrollbar 120 moves by means of a mouse to allow a selected line 110 to be located on a display area A of a first voice content 100-1, while pre-listening voices of a plurality of voice contents 100-1 to 100-n on a voice content list 10 are being reproducible, so that the voice of the first voice content 100-1 is reproduced automatically, without having any separate click or touch.

On the other hand, FIG.4 shows a screen on which if the selected line 110 is located between the center of the display area of a third voice content 100-3 and the center of the display area of a fourth voice content 100-4, a voice of the third voice content 100-3 and a voice of the fourth voice content 100-4 are at the same time reproduced automatically.

Further, FIG.5 shows a screen on which if the selected line 110 passes through the first voice content 100-1 and the second voice content 100-2 and is thus located at the display area of the third voice content 100-3 through the touch sliding of the screen, while pre-listening voices of the plurality of voice contents 100-1 to 100-n on the voice content list 10 on a smartphone are being reproducible, the voice of the third voice content 100-3 is currently reproduced automatically after the voices of the first voice content 100-1 and the second voice content 100-2 have been reproduced during the selected line 110 passes through the display areas of the first voice content 100-1 and the second voice content 100-2, without having any separate click or touch.

On the other hand, FIG.6 shows a screen on which if the selected line 110 is located between the center of the display area of the third voice content 100-3 and the center of the display area of the fourth voice content 100-4, the voice of the third voice content 100-3 and the voice of the fourth voice content 100-4 are at the same time reproduced automatically.

Further, FIG.7 shows a screen on which when the selected line 110 is located on the first voice content 100-1 to reproduce the voice of the first voice content 100-1, it may be located at various positions of the display area of the first voice content by means of the scrolling. In more detail, the selected line 110 is moved downward to the positions a₁, a₂ and a₃ on the display area A of the first voice content 100-1 by means of scrolling (downward). According to the present invention, as the selected line 110 is distant from the center a₂ of the display area A, the loudness of the voice of the corresponding voice content becomes small. That is, if the selected line 110 is located at the upper end portion a₁ or the lower end portion a₃, the loudness of the voice of the corresponding voice content is smaller than that of the voice when the selected line 110 is located at the center a₂. Further, the loudness of the voice of the corresponding voice content becomes gradually small as the selected line 110 is moved from the center a₂ of the display area A to the upper end portion a₁ or the lower end portion a₃ thereof.

When the scrolling is conducted on the screen by the user, therefore, the selected line just passes through the given voice content, so that the voice of the given voice content is reproduced, thus drastically reducing the time for searching a desired voice content and performing the pre-listening in a very convenient way.

## Claims

1. A method for pre-listening to voice contents, which is used in a system providing the voice contents, the method comprising the steps of:
displaying the voice contents in a form of a list;
scrolling a screen such that a given desired voice content of the voice contents is located on a selected line; and
reproducing a voice of the desired voice content located on the selected line,
wherein the selected line just passes through the voice contents during the scrolling, thus reproducing the voice of the desired voice content on which the selected line is located.

2. The method for pre-listening to voice contents according to claim 1, wherein in the step of reproducing the voice of the given voice content located on the selected line, as the selected line is distant from the center of the display area of the given voice content, the loudness of the voice of the given voice content becomes decreased.

3. The method for pre-listening to voice contents according to claim 1, wherein in the step of scrolling the screen, if the selected line is located between the center of the display area of a first voice content and the center of the display area of a second voice content, both of the voice of the first voice content and the voice of the second voice content are reproduced.

4. The method for pre-listening to voice contents according to claim 3, wherein both of the voice of the first voice content and the voice of the second voice content are reproduced, and the loudness of the voice of the voice content having the display area whose center is located closer to the selected line is larger than the loudness of the voice of the other voice content.

5. The method for pre-listening to voice contents according to claim 1, wherein in the step of scrolling the screen, if the selected line is located between the center of the display area of the first voice content and the center of the display area of the second voice content, the voice of the voice content having the display area whose center is located closer to the selected line is reproduced.

6. The method for pre-listening to voice contents according to claim 1, wherein in the step of scrolling the screen, if the selected line is located between the center of the display area of the first voice content and the center of the display area of the second voice content, no voices of the first voice content and the second voice content are reproduced.

7. The method for pre-listening to voice contents according to claim 1, wherein the selected line comprises a linear, curved or oblique line traversing the screen horizontally or vertically.

8. The method for pre-listening to voice contents according to claim 7, wherein the linear, curved or oblique line comprises a solid, broken, or dashed and dotted line.

9. The method for pre-listening to voice contents according to claim 1, wherein the selected line comprises a figure having a given area or a figure having an empty interior and an outline.

10. The method for pre-listening to voice contents according to claim 1, wherein the selected line comprises a figure or character.

11. The method for pre-listening to voice contents according to claim 9 or 10, wherein the position of the selected line is arbitrarily determined on the screen by means of a user.

12. The method for pre-listening to voice contents according to claim 1, wherein the system providing the voice contents comprises a mobile communication terminal like a smartphone, a tablet PC, a PMP, and a cellular phone, a desktop personnel computer, a laptop computer, a notebook computer, a smart TV, a set-top box, a frame type smart terminal, a vehicle navigator, an IP telephone terminal, a wearable computer, a game machine, a CD/MP3 player, a CD pre-listening machine of a record store, a karaoke machine, a background song reproduction machine or a jukebox.
